# EUROPÄISCHE PATENTSCHRIFT

(11) **EP 0 340 544 B1**
(45) Veröffentlichungstag und Bekanntmachung des Hinweises auf die Patenterteilung: **04.08.1993**
(21) Anmeldenummer: 89107088.0
(22) Anmeldetag: 20.04.1989
(51) Int. Cl.: C01B 33/26

(54) **Verfahren zur Aufarbeitung wässriger, Elektrolyte enthaltender Suspensionen hochquellfähiger Schichtsilicate**
Process for the treatment of aqueous, electrolyte containing suspensions of phyllosilicates with a high savelling capacity
Procédé de traîtement de suspensions aqueuses de phyllosilicates à forte capacité de gonflement et contenant un électrolyte

(30) Priorität: 30.04.1988 DE 3815008
(43) Veröffentlichungstag der Anmeldung: 08.11.1989
(73) Patentinhaber: Henkel Kommanditgesellschaft auf Aktien, 40191 Düsseldorf (DE)
(72) Erfinder: Wüst, Willi, Dr., D-4030 Ratingen (DE); Kühne, Norbert, D-5657 Haan 1 (DE)
(74) Vertreter: Patentanwälte Meinke, Dabringhaus und Partner

(56) Entgegenhaltungen:
- EP-A- 0 235 081
- WO-A-88/06475
- FR-A- 2 407 012
- US-A- 4 610 792

## Beschreibung

Die Erfindung richtet sich auf ein Verfahren zur Aufarbeitung wässriger, Elektrolyte enhaltender Suspensionen hochquellfähiger Schichtsilicate.

Derartige Aufarbeitungsverfahren für hochquellfähige Schichtsilicate, wie Hectorite, sind bekannt. Dabei sollen die Schichtsilicate elektrolytfrei aus der Ausgangssuspension isoliert und abgetrennt werden.

Nach bekannten Verfahren wird dazu zunächst die Mutterlauge durch Filtration in Filterpressen, insbesondere Membranfilterpressen, abgetrennt Die Schichtsilicate verbleiben als gelige Masse zusammen mit einem Teil der adhärierenden, stark elektrolythaltigen Mutterlauge im Filterkuchen. Um die Schichtsilicate aus dem Filterkuchen elektrolytfrei zu isolieren, ist es üblich, den Filterkuchen mit Wasser auszuspülen Aufgrund der noch vorhandenen Elektrolyte beginnen die Schichtsilicate jedoch stark zu quellen, so daß die Poren des Filtermediums verstopfen und die Filtration stark erschwert, bzw. unmöglich gemacht wird. Aufgrund dieser Schwierigkeiten ist die Aufarbeitung der Schichtsilicate nur durch einen sehr langwierigen, aufwendigen Filtrations- und Auswaschungsprozeß möglich.

Aufgabe der Erfindung ist die Schaffung einer Lösung, mit welcher hochquellfähige Schichtsilicate nahezu elektrolytfrei mit vertretbarem Zeitaufwand aus einer wässrigen, Elektrolyte enthaltenden Suspension isoliert werden können.

Diese Aufgabe wird mit einem Verfahren der eingangs bezeichneten Art erfindungsgemäß dadurch gelöst, daß die Schichtsilicate durch mehrstufige Membranfiltration als Konzentrat aus der Suspension abgetrennt werden, und daß vor der zweiten und jeder folgenden Membranstufe das Konzentrat z. B. mit vollentsalztem Wasser zur Aufrechterhaltung der Pumpfähigkeit verdünnt wird.

Es wurde überraschend gefunden, daß die Schichtsilicate durch Membranfiltration nahezu vollständig elektrolytfrei aus der Ausgangssuspension isoliert werden können. Durch den gegenüber dem mittleren Durchmesser der aufgequollenen Schichtsilicate wesentlich kleineren Porendurchmesser der Membranen kann sich dabei das Konzentrat nicht wie bei Filterpressen auf den Poren absetzen, so daß das elektrolythaltige Permeat jederzeit durch die Poren treten kann. Wie bei üblichen Membranverfahren ist die Filtrationszeit gegenüber dem Zeitaufwand bei der Aufarbeitung in Filterpressen zu vernachlässigen.

In besonders vorteilhafter Ausgestaltung sieht die Erfindung vor, daß die Ausgangssuspension den hintereinandergeschalteten Membranstufen kontinuierlich zugeführt wird. Bei dieser kontinuierlichen Fahrweise können die aufgearbeiteten Schichtsilicate ohne Unterbrechungen entsprechend weiterbehandelt oder verarbeitet werden.

Es kann aber auch vorgesehen sein, daß die Ausgangssuspension diskontinuierlich aus einem Vorratsbehälter einer oder mehreren parallel geschalten Membranstufen zugeführt wird, das Konzentrat aus den einzelnen Stufen in einem Sammelbehälter gesammelt und in diesen mit vollentsalztem Wasser verdünnt wird, und daß anschließend das verdünnte Konzentrat weiteren Reinigungen in den Membranstufen mit jeweiliger Rückführung und Verdünnung unterzogen wird. Diese Verfahrensführung ist besonders dann geeignet, wenn die aufgearbeiteten Schichtsilicate nicht sofort oder nur chargenweise weiterverarbeitet werden sollen.

Es ist besonders zweckmäßig, daß jede Membranstufe von einer Mehrzahl aus hintereinandergeschalteten, Membranmodulen gebildet wird. Durch diese Hintereinanderschaltung mehrerer Module wird ein ausreichender Filtrationserfolg gewährleistet.

Es hat sich als besonders günstig herausgestellt, daß die Membranfiltration bei Überströmgeschwindigkeiten von 3 bis 6 m/s, insbesondere 4 bis 4,5 m/s, durchgeführt wird.

Die Erfindung sieht auch vor, daß die Membranfiltration bei Temperaturen von 20 bis 200^{o}C, vorzugsweise 80 bis 140^{o}C durchgeführt wird. Dabei ist die genaue Temperaturführung von den Eigenschaften der jeweils aufzuarbeitenden Schichtsilicate abhängig.

Es hat sich als zweckmäßig erwiesen, daß die Membranfiltration bei konzentratseitigem Drücken von etwa 16 bar beim Eintritt in jede Membranstufe durchgeführt wird. Bei diesem Druck ist ein optimaler Filtrationserfolg zu erzielen.

In besonders vorteilhafter Ausgestaltung ist vorgesehen, daß die Membranfiltration bei permeatseitigen Drücken oberhalb des jeweiligen Wasserdampfdruckes durchgeführt wird. Durch diese Verfahrensführung wird erreicht, daß bei Temperaturen von oberhalb 100^{o}C auf der Permeatseite keine Wasserverdampfung auftreten kann, welche die Filtration beeinträchtigen würde.

Erfindungsgemäß kann auch vorgesehen sein, daß die Ausgangssuspension vor der Aufarbeitung durch die Membranfiltration in einer Filterpresse filtriert wird. In dieser Filterpressen wird dann zunächst der Großteil der Mutterlauge der Ausgangssuspension abgetrennt, bevor die eigentliche Aufarbeitung beginnt.

Schließlich sieht die Erfindung auch vor, daß die elektrolytfreie Suspension nach der Membranfiltration durch Zerstäubungs- und/oder Sprühtrocknung getrocknet wird.

Die Erfindung ist nachstehend anhand der Zeichnung beispielsweise näher erläutert. Diese zeigt in:

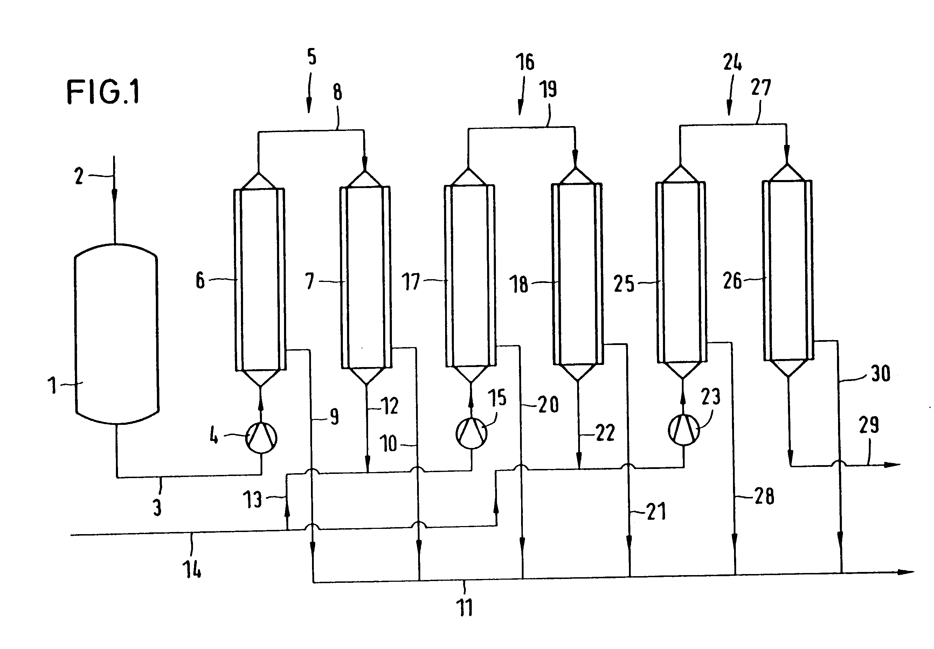

- Fig. 1: ein vereinfachtes Verfahrensfließbild einer kontinuierlichen Membranfiltrationsanlage und in
- Fig. 2: ein vereinfachtes Verfahrensfließband einer diskontinuierlichen Membranfiltrationsanlage.

Eine kontinuierliche Membranfiltrationsanlage weist einen Vorratsbehälter 1 auf, dem über eine Leitung 2 eine wässrige, Elektrolyte enthaltende Suspension hochquellfähiger Schichtsilicate zugeführt wird. Aus dem Vorratsbehälter 1 ist eine Leitung 3 geführt, in der eine Pumpe 4 angeordnet ist. Die Leitung 3 mündet in eine erste Membranstufe 5, die aus zwei hintereinandergeschalteten Modulen 6 und 7 besteht, wobei das Konzentrat aus dem Modul 6 über eine Leitung 8 dem Modul 7 zugeführt wird.

Über zwei Permeatleitungen 9 und 10 wird das Permeat aus den Modulen 6 und 7 in eine zentrale Permeatleitung 11 abgeführt. Am Konzentrataustritt des Moduls 7 der ersten Stufe 5 ist eine Konzentratleitung 12 angeordnet, in die eine Leitung 13 mündet, welche von einer zentralen Wasserleitung 14 abzweigt, durch welche vollentsalztes Wasser gefördert wird.

Die Leitung 12 ist über eine Pumpe 15 in eine zweite Membranstufe 16 geführt, die aus zwei hintereinander geschalteten Modulen 17 und 18 besteht. Vom Modul 17 geht eine Konzentratleitung 19 und eine Permeatleitung 20 aus, die in die zentrale Permeatleitung 11 mündet. Auf der Permeatseite des Moduls 18 ist eine Leitung 21 angeschlossen und auf der Konzentratseite eine Leitung 22. In diese Leitung 22 mündet die zentrale Wasserleitung 14.

Die Leitung 22 ist über eine Pumpe 23 in eine dritte Membranstufe 24 geführt, die von zwei Modulen 25 und 26 gebildet ist. Dabei ist am Modul 25 eine Konzentratleitung 27, die in den Modul 26 mündet, und eine Permeatleitung 28 angeordnet, welche in die zentrale Permeatleitung 11 geführt ist. Vom Modul 26 geht auf der Konzentratseite eine Produktleitung 29 und auf der Permeatseite eine Leitung 30 aus, welche in die zentrale Permeatleitung 11 mündet.

Aus dem Vorratsbehälter 1 wird über die Leitung 3 und die Pumpe 4 kontinuierlich der ersten Membranstufe 5 die wässrige, elektrolythaltige Ausgangssuspension hochquellfähiger Schichtsilicate zugeleitet. Im ersten Modul 6 wird ein Teil des wässrigen Elektolyten abfiltriert und über die Permeatleitung 9 abgeführt. Die aufkonzentrierten Schichtsilicate gelangen anschließend über die Konzentratleitung 8 in den zweiten Modul 7 und werden in diesem weiter aufkonzentriert, wobei wässriger Elektrolyt als Permeat abfiltriert und über die Leitung 10 abgeführt wird. Das gerade noch pumpfähige Konzentrat mit einem schon deutlich verringerten Elektrolytgehalt wird anschließend mit vollentsalztem Wasser aus der Leitung 13 zur Verbesserung der Pumpfähigkeit verdünnt und von der Pumpe 15 in die zweite Membranstufe 16 gefördert.

In den Modulen 17 und 18 der zweiten Membranstufe 16 wird wiederum über die Permeatleitungen 20 und 21 das abfiltrierte, elektrolythaltige Permeat abgeführt. Das noch pumpfähige Konzentrat des Moduls 18 weist nunmehr bereits einen sehr geringen Elektrolytgehalt auf. Um aber eine vollständige Abtrennung des Elektrolyten zu erreichen, wird das Konzentrat mit den Schichtsilicaten einer dritten Membranstufe 24 zugeführt. Dabei wird das aus der zweiten Membranstufe 16 über die Leitung 22 austretende Konzentrat zunächst über die Leitung 14 mit vollentsalztem Wasser zur Verbesserung der Pumpfähigkeit vermischt und von der Pumpe 23 in die Membranstufe 24 gefördert. In den Modulen 25 und 26 erfolgt dann die weitere Aufarbeitung der Schichtsilicate. Der noch verbliebene Elektrolytrest wird dabei über die Leitungen 28 und 30 aus den Modulen 25 und 26 permeatseitig abgeführt. Das aus dem Modul 26 über die Leitung 29 austretende Konzentrat besteht nunmehr aus einer vollständig elektrolytfreien Schichtsilicatsuspension. Über die Leitung 29 kann diese elektrolytfreie Suspension anschließend einer Trocknung oder dgl. zugeführt werden, was in der Zeichnung nicht näher dargestellt ist.

Wird die Filtration in den Membranstufen 5, 16 und 24 bei einer Temperatur oberhalb von 100^{o}C durchgeführt so ist erfindungsgemäß vorgesehen, daß permeatseitig ein Druck angelegt wird, der über dem entsprechenden Wasserdampfdruck liegt, was in der Zeichnung aber nicht näher dargestellt ist. Durch diese Maßnahme wird vermieden, daß das wasserhaltige Permeat verdampfen kann und somit den Filtrationsablauf beeinträchtigt.

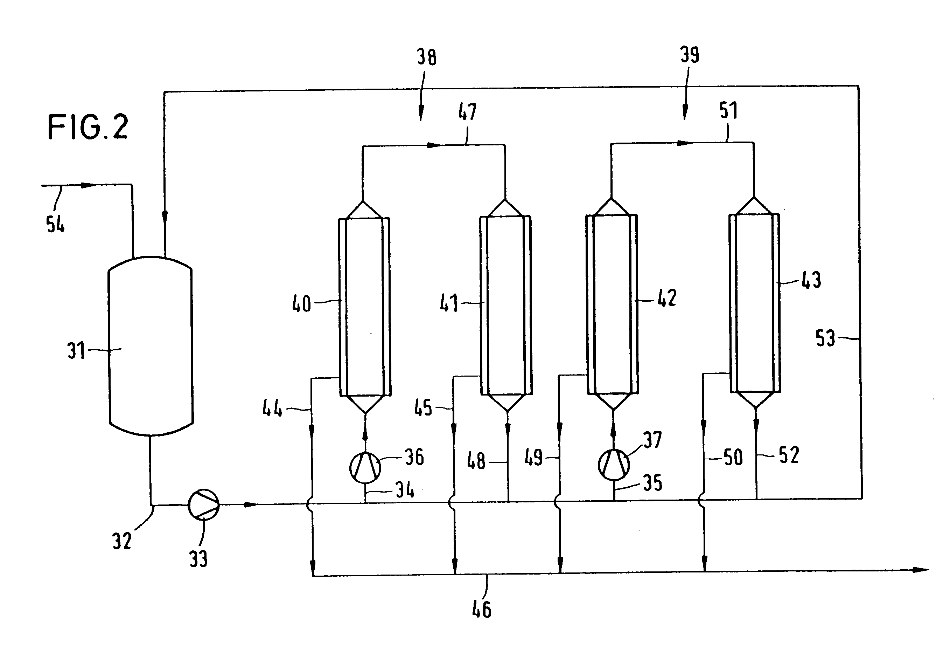

In Fig. 2 ist eine diskontinuierliche Membranfiltrationsanlage dargestellt. Ein Vorratsbehälter 31 zur Aufnahme der elektrolythaltigen Ausgangssuspension hochquellfähiger Schichtsilicate weist eine Austrittsleitung 32 auf, in der eine Pumpe 33 angeordnet ist. Von der Leitung 32 gehen zwei parallele Abzweigungen 34 und 35 mit Pumpen 36 und 37 ab.

Die Abzweigungen 34 und 35 münden in zwei parallel geschaltete Membranstufen 38 und 39, die jeweils aus zwei hintereinandergeschalteten Modulen 40, 41 bzw. 42, 43 bestehen. Vom ersten Modul 40 der ersten Membranstufe 38 geht eine Permeatleitung 44 und vom zweiten Modul 41 eine Permeatleitung 45 ab, die beide in eine zentrale Permeatleitung 46 münden. Das Konzentrat des Moduls 40 tritt über eine Konzentratleitung 47 in den zweiten Modul 41 ein, dessen Konzentrat über eine Leitung 48 austritt.

Die zweite Membranstufe 39 weist am ersten Modul 42 eine Permeatleitung 49 und am zweiten Modul 43 eine Permeatleitung 50 auf. Das Konzentrat des Moduls 42 wird über eine Leitung 51 in den zweiten Modul 43 geführt, dessen Konzentrat über eine Leitung 52 in die Leitung 32 eintritt.

Die Leitung 32 ist hinter der Einmündung der Leitung 52 als Rückführleitung 53 ausgebildet und mündet in den Vorratsbehälter 31. Außerdem weist der Vorratsbehälter 31 noch eine Zuleitung 54 für vollentsalztes Wasser auf.

Die wässrige, elektrolythaltige Ausgangssuspension hochquellfähiger Schichtsilicate wird aus dem Vorratsbehälter 31 durch die Leitung 32 von der Pumpe 33 gefördert, wobei die Pumpe 33 nach Entleerung des Behälters 31 abgestellt wird. Über die Abzweigungen 34 und 35 sowie die Pumpen 36 und 37 wird die Ausgangssuspension anschließend in die parallel geschalteten Membranstufen 38 und 39 gepumpt. Dabei wird die Suspension zunächst im ersten Modul 40 bzw. 42 aufkonzentriert, dessen wässriges, elektrolythaltiges Permeat über die Leitungen 44 und 49 in die zentrale Permeatleitung 46 abgeführt wird. Die im Konzentrat enthaltenen Schichtsilicate werden über die Leitungen 47 bzw. 51 in den jeweils zweiten Modul 41 bzw. 43 geleitet und weiter aufkonzentriert. Dabei tritt das elektrolythaltige Permeat über die Permeatleitungen 45 und 50 aus, während das Konzentrat mit den Schichtsilicaten durch die Leitungen 48 und 52 abgeführt und in die Rückführleitung 53 gefördert wird. Über die Rückführleitung 53 gelangt die noch pumpfähige, aufkonzentrierte Suspension anschließend in den Vorratsbehälter 31 zurück, der nun als Sammelbehälter dient.

Über die Leitung 54 wird vollentsalztes Wasser in den Vorrats- bzw. Sammelbehälter 31 geführt und mit der Suspension vermischt. Dadurch wird die Suspension verdünnt, so daß die Pumpfähigkeit verbessert wird.Anschließend wird die Pumpe 33 wieder gestartet und die Suspension in den Membranstufen 38 und 39 weiter aufgearbeitet, so daß mehr und mehr Elektrolyt als Permeat abgeschieden wird. Das Konzentrat aus dieser Aufarbeitung wird wiederum dem Sammelbehälter 31 über die Rückleitung 53 zurückgeführt.

Dieses Verfahren wird solange wiederholt, bis der Elektrolytgehalt der Suspension im Sammelbehälter 31 vernachlässigbar ist. Die aufgearbeitete Suspension kann dem Sammelbehälter 31 anschließend entnommen und weiterverarbeitet werden. Der somit entleerte Vorrats- bzw. Sammelbehälter 31 kann dann mit einer neuen elektrolythaltigen Ausgangssuspension gefüllt werden.

Natürlich ist die Erfindung nicht auf die in der Zeichnung dargestellten Ausführungsbeispiele beschränkt. Weitere Ausgestaltungen der Erfindung sind möglich. So kann eine Membranstufe auch von mehr als zwei hintereinander geschalteten Modulen gebildet sein. Außerdem ist die Anzahl der eingesetzten Membranstufen dem jeweiligen Anwendungsfall anzupassen.

## Patentansprüche

1. Verfahren zur Aufarbeitung wässriger, Elektrolyte enthaltender Suspensionen hochquellfähiger Schichtsilicate,
dadurch gekennzeichnet,
daß die Schichtsilicate durch mehrstufige Membranfiltration als Konzentrat aus der Suspension abgetrennt werden, und daß vor der zweiten und jeder folgenden Membranstufe das Konzentrat z. B. mit vollentsalztem Wasser zur Aufrechterhaltung der Pumpfähigkeit verdünnt wird.

2. Verfahren nach Anspruch 1,
dadurch gekennzeichnet,
daß die Ausgangssuspension den hintereinander geschalteten Membranstufen kontinuierlich zugeführt wird.

3. Verfahren nach Anspruch 1,
dadurch gekennzeichnet,
daß die Ausgangssuspension diskontinuierlich aus einem Vorratsbehälter einer oder mehreren parallel geschalteten Membranstufen zugeführt wird, das Konzentrat aus den einzelnen Stufen in einem Sammelbehälter gesammelt und in diesem mit vollentsalztem Wasser verdünnt wird, und daß anschließend das verdünnte Konzentrat weiteren Reinigungen in den Membranstufen mit jeweiliger Rückführung und Verdünnung unterzogen wird.

4. Verfahren nach Anspruch 1 oder einem der folgenden,
dadurch gekennzeichnet,
daß jede Membranstufe von einer Mehrzahl aus hintereinandergeschalteten Membranmodulen gebildet wird.

5. Verfahren nach Anspruch 1 oder einem der folgenden,
dadurch gekennzeichnet,
daß die Membranfiltration bei Überströmgeschwindigkeiten von 3 bis 6 m/s durchgeführt wird.

6. Verfahren nach Anspruch 1 oder einem der folgenden,
dadurch gekennzeichnet,
daß die Membranfiltration bei Überströmgeschwindigkeiten von 4 bis 4,5 m/s durchgeführt wird.

7. Verfahren nach Anspruch 1 oder einem der folgenden,
dadurch gekennzeichnet,
daß die Membranfiltration bei Temperaturen von 20 - 200^{o}C durchgeführt wird.

8. Verfahren nach Anspruch 1 oder einem der folgenden,
dadurch gekennzeichnet,
daß die Membranfiltration bei Temperaturen von 80 bis 140^{o}C durchgeführt wird.

9. Verfahren nach Anspruch 1 oder einem der folgenden,
dadurch gekennzeichnet,
daß die Membranfiltration bei konzentratseitigem Drücken von etwa 16 bar beim Eintritt in jede Membranstufe durchgeführt wird.

10. Verfahren nach Anspruch 1 oder einem der folgenden,
dadurch gekennzeichnet,
daß die Membranfiltration bei permeatseitigen Drücken oberhalb des jeweiligen Wasserdampfdruckes durchgeführt wird.

11. Verfahren nach Anspruch 1 oder einem der folgenden,
dadurch gekennzeichnet,
daß die Ausgangssuspension vor Aufarbeitung durch die Membranfiltration in einer Filterpresse filtriert wird.

12. Verfahren nach Anspruch 1 oder einem der folgenden,
dadurch gekennzeichnet,
daß die elektrolytfreie Suspension nach der Membranfiltration durch Zerstäubungs- und/oder Sprühtrocknung getrocknet wird.

## Claims

1. A process for working up aqueous electrolyte-containing suspensions of highly swellable layer silicates, characterized in that the layer silicates are separated from the suspension in the form of a concentrate by multistage membrane filtration and in that, before the second and each following membrane stage, the concentrate is diluted, for example with fully deionized water, to maintain pumpability.

2. A process as claimed in claim 1, characterized in that the starting suspension is fed continuously to the membrane stages arranged one behind the other.

3. A process as claimed in claim 1, characterized in that the starting suspension is fed discontinuously from a storage tank to one or more membrane stages arranged in parallel, the concentrate from the individual stages is collected in a collecting tank and is diluted therein with fully deionized water and in that the diluted concentrate is then subjected to further purifications in the membrane stages with recycling and dilution thereafter.

4. A process as claimed in claim 1 or any of the following claims, characterized in that each membrane stage is formed by a plurality of membrane modules arranged one behind the other.

5. A process as claimed in claim 1 or any of the following claims, characterized in that the membrane filtration is carried out at crossflow rates of 3 to 6 m/s.

6. A process as claimed in claim 1 or any of the following claims, characterized in that the membrane filtration is carried out at crossflow rates of 4 to 4.5 m/s.

7. A process as claimed in claim 1 or any of the following claims, characterized in that the membrane filtration is carried out at temperatures of 20 to 200°C.

8. A process as claimed in claim 1 or any of the following claims, characterized in that the membrane filtration is carried out at temperatures of 80 to 140°C.

9. A process as claimed in claim 1 or any of the following claims, characterized in that the membrane filtration is carried out under pressures on the concentrate side of approximately 16 bar at the entrance to each membrane stage.

10. A process as claimed in claim 1 or any of the following claims, characterized in that the membrane filtration is carried out under pressures on the permeate side above the particular steam pressure.

11. A process as claimed in claim 1 or any of the following claims, characterized in that the starting suspension is filtered in a filter press before working up by membrane filtration.

12. A process as claimed in claim 1 or any of the following claims, characterized in that, after membrane filtration, the electrolyte-free suspension is dried by spray drying.

## Revendications

1. Procédé de traitement de suspensions aqueuses contenant des électrolytes de silicates en couche (phyllosilicates) à capacité élevée de gonflement, caractérisé en ce que les silicates en couche sont séparés sous forme de concentré de la suspension par filtration sur membrane à plusieurs étages et en ce qu'avant le deuxième et chacun des étages à membrane suivants, le concentré est dilué par exemple avec de l'eau complètement déminéralisée pour le maintien de son aptitude au pompage.

2. Procédé selon la revendication 1, caractérisé en ce que la suspension de départ est amenée en continu à des étages à membrane montés en série.

3. Procédé selon la revendication 1, caractérisé en ce que la suspension de départ est amenée d'une manière discontinue à partir d'un récipient d'alimentation à un ou plusieurs étages à membrane montés en parallèle, en ce que le concentré est rassemblé à partir des étages individuels dans un récipient de recueil et dans celui-ci est dilué avec de l'eau complètement déminéralisée et en ce qu'ensuite le concentré dilué est soumis à des purifications supplémentaires dans des étages à membrane avec à chaque fois retour et dilution.

4. Procédé selon la revendication 1 ou une des suivantes, caractérisé en ce que chaque étage à membrane est formé d'une multiplicité de modules de membranes montés en série.

5. Procédé selon la revendication ou une des suivantes, caractérisé en ce que la filtration sur membrane est effectuée à des vitesses de passage de 3 à 6 m/s.

6. Procédé selon la revendication 1 ou une des suivantes, caractérisé en ce que la filtration sur membrane est effectuée à des vitesses de passage de 4 à 4,5 m/s.

7. Procédé selon la revendication 1 ou une des suivantes, caractérisé en ce que la filtration sur membrane est effectuée à des températures qui vont de 20 à 200°C.

8. Procédé selon la revendication 1 ou une des revendications suivantes, caractérisé en ce que la filtration sur membrane est effectuée à des températures allant de 80° à 140°C.

9. Procédé selon la revendication 1 ou une des suivantes, caractérisé en ce que la filtration sur membrane est effectuée à des pressions du côté du concentré d'environ 16 bars lors de l'entrée dans chaque étage à membrane.

10. Procédé selon la revendication 1 ou une des suivantes, caractérisé en ce que la filtration sur membrane est effectuée à des pressions du côté du produit de perméation au-dessus de la pression de vapeur d'eau correspondante.

11. Procédé selon la revendication 11 ou une des suivantes, caractérisé en ce que la suspension de départ est filtrée avant le traitement par filtration sur membrane dans un filtre-presse.

12. Procédé selon la revendication 1 ou une des suivantes, caractérisé en ce que la suspension dépourvue d'électrolytes est séchée après la filtration sur membrane par séchage par pulvérisation et/ou par atomisation.
